# EUROPÄISCHE PATENTSCHRIFT

(11) **EP 3 180 532 B1**
(45) Veröffentlichungstag und Bekanntmachung des Hinweises auf die Patenterteilung: **10.10.2018**
(21) Anmeldenummer: 15754108.7
(22) Anmeldetag: 23.07.2015
(51) Int. Cl.: F16D 21/06, F16D 13/70, F16D 13/38

(54) **DOPPELKUPPLUNG MIT IN UMFANGSRICHTUNG AUSGERICHTETER UND AXIAL ABSTEHENDER LASCHE EINER GEGENDRUCKPLATTE**
DUAL CLUTCH WITH A CIRCUMFERENTIALLY ALIGNED AND AXIALLY PROTRUDING LUG OF A COUNTERPRESSURE PLATE
EMBRAYAGE DOUBLE MUNI D'UNE ATTACHE, ÉCARTÉE AXIALEMENT ET ORIENTÉE DANS UNE DIRECTION CIRCONFÉRENTIELLE, D'UNE PLAQUE DE PRESSION ANTAGONISTE

(30) Priorität: 11.08.2014 DE 102014215882
(43) Veröffentlichungstag der Anmeldung: 21.06.2017
(73) Patentinhaber: Schaeffler Technologies AG & Co. KG, 91074 Herzogenaurach (DE)
(72) Erfinder: MICHELBACH, Thomas, F-67100 Strasbourg (FR)
(86) Internationale Anmeldenummer: PCT/DE2015/200417
(87) Internationale Veröffentlichungsnummer: WO 2016/023549

(56) Entgegenhaltungen:
- DE-A1- 3 333 181
- DE-A1-102004 001 541
- DE-A1-102014 203 418
- FR-A1- 2 713 294

## Beschreibung

Die Erfindung betrifft eine Doppelkupplung für ein Kraftfahrzeug, mit einer motorseitig angeordneten ersten Teilkupplung und einer getriebeseitig angeordneten zweiten Teilkupplung, wobei jede Teilkupplung eine Anpressplatte aufweist, die zum Einklemmen einer Kupplungsscheibe auf eine Gegendruckplatte zu bewegbar ist, wobei die Gegendruckplatte wenigstens einer Teilkupplung mittels einer Blattfeder mit der Anpressplatte derselben Teilkupplung verbunden ist.

Aus dem Stand der Technik, etwa der EP 1 524 446 B1, ist eine ähnliche Doppelkupplung bekannt, die dort als Kupplungsaggregat vorgestellt wird. Das Kupplungsaggregat soll wenigstens zwei Reibungskupplungen enthalten, die jeweils mindestens eine Kupplungsscheibe aufweisen, wobei die beiden Kupplungsscheiben mit einer eigenen anzutreibenden Welle verbindbar sind und die beiden Kupplungen unabhängig voneinander über jeweils einen Betätigungsmechanismus ein- und ausrückbar sind, wobei die Schließkraft der Kupplungen unmittelbar von den Betätigungsmechanismen aufgebracht wird. Als besonders ist dabei herausgestellt, dass die Kombination bestimmter Merkmale vorliegt, nämlich dass beide Kupplungen jeweils von einer ringförmig ausgebildeten Kolben-Zylinder-Einheit der Betätigungsmechanismen betätigbar sind, dass die Kolben-Zylinder-Einheiten koaxial und zumindest teilweise axial ineinander geschachtelt sind, und dass ferner zur Übertragung der Anpresskraft zwischen der jeweiligen Anpressplatte einer Kupplung und dem im zugehörigen Betätigungsmechanismus ein topf- oder tellerförmiges, praktisch starres Zwischenelement vorgesehen ist.

Üblicherweise werden die beiden Gegenplatten bzw. Gegendruckplatten, wenn sie miteinander drehfest verbunden werden, über Stufenbolzen aneinander angebracht. Dies ist beispielsweise auch in einer älteren Anmeldung, nämlich der DE 10 2014 205 773.6, die bisher noch nicht veröffentlicht ist, dargestellt. Als Nachteil hat sich aber bei solchen Lösungen herausgestellt, dass zusätzliche Montageschritte notwendig sind, zusätzlich Bauteile eingebracht werden müssen bzw. verwendet werden müssen, und Eingrabungen bei einer Vernietung in die benachbarten Blechplatten zu beklagen sind.

Eine weitere Doppelkupplung ist aus der DE 10 2004 001541 A1 bekannt. Allerdings ist es die Aufgabe der vorliegenden Erfindung, eine Verbesserung bei Doppelkupplungen zu bewirken, insbesondere eine Kosteneinsparung und eine schnellere Montage zu ermöglichen. Die Nachteile aus dem Stand der Technik sollen auch vermieden werden. Blechplattenartige Gegendruckplatten sollen bei Einhaltung eines entsprechenden Abstandes aneinander befestigbar sein.
Diese Aufgabe wird erfindungsgemäß dadurch gelöst, dass wenigstens eine der Gegendruckplatten und/oder wenigstens eine der Anpressplatten eine der Umfangsrichtung folgende Lasche ausbildet, die axial abstehend einen Befestigungsbereich mit der Blattfeder vorgibt.
Auf diese Weise können kostengünstige Stanzprozesse eingesetzt werden und in Abhängigkeit des jeweiligen Doppelkupplungstyps der Axialversatz, also das axiale Abstehen der Lasche eingestellt/vordefiniert werden. Dies ist besonders kostengünstig und zeiteffizient. Auf Gussteile kann dabei verzichtet werden und es können dann belastbare und kostengünstige Blechbauteile eingesetzt werden.
Natürlich ist es auch von Vorteil, wenn an der jeweiligen Gegendruckplatte und/oder an der jeweiligen Anpressplatte mehrere gleichartig oder ähnlich ausgebildete Laschen vorhanden sind.
Die Erfindung sieht also vor, dass an einer Gegendruckplatte oder an einer Anpressplatte ein axial abstehender Befestigungsbereich vorgesehen ist, oder dass an einer Gegendruckplatte und an einer zugehörigen Anpressplatte ein axial abstehender Befestigungsbereich vorgesehen ist, oder dass bei einer Teilkupplung der Doppelkupplung an einer Gegendruckplatte und bei der anderen Teilkupplung der Doppelkupplung an einer Anpressplatte jeweils ein axial abstehender Befestigungsbereich vorgesehen ist.
Vorteilhafte Ausführungsformen sind auch in den Unteransprüchen beansprucht und werden nachfolgend näher erläutert.

Steht der Befestigungsbereich an einer Gegendruckplatte ab, kann weiterbildend vorgesehen sein, dass der Befestigungsbereich axial zu einer Ruhelage der entsprechenden Anpressplatte absteht. Steht der Befestigungsbereich an einer Anpressplatte ab, kann weiterbildend vorgesehen sein, dass der Befestigungsbereich bei Vorliegen einer Ruhelage der Anpressplatte axial zu der entsprechenden Gegendruckplatte absteht. Steht sowohl ein Befestigungsbereich an einer Gegendruckplatte wie auch ein Befestigungsbereich an einer entsprechenden Anpressplatte ab, kann weiterbildend vorgesehen sein, dass die Befestigungsbereiche bei Vorliegen einer Ruhelage der Anpressplatte axial komplementär zueinander abstehen.

Auch ist es beispielsweise von Vorteil, wenn die Lasche ein integraler Bestandteil der Gegendruckplatte oder der Anpressplatte ist, von welcher diese wenigstens abschnittsweise axial absteht. Im Endbereich ist eine Parallelität zum Hauptkörper der Gegendruckplatte wünschenswert, also eine Ausrichtung orthogonal zur Längsachse der Kupplung. Dies ermöglicht einen direkten Kraftfluss zwischen der Blattfeder und der Gegendruckplatte/der Anpressplatte.

Für ein präzises Verbauen ist es vorteilhaft, wenn die Lasche der Gegendruckplatte oder Anpressplatte mit der Blattfeder in direktem Kontakt steht.

Es ist auch von Vorteil, wenn im Befestigungsbereich ein Bolzen oder Niet eingesetzt ist oder zusätzlich oder alternativ eine Schraube zum kraftschlüssigen Verbinden vorhanden ist. Natürlich kann auch über den Umfang gesehen abwechselnd ein Bolzen/Niet und eine Schraube eingesetzt sein. Das Abwechseln kann regelmäßig oder unregelmäßig erfolgen.

Es ist zweckmäßig, wenn die Lasche in Umfangsrichtung zu der Blattfeder weisend ein freies Ende besitzt, da die Gegendruckplatte oder Anpressplatte und die Blattfeder dann im Bereich der jeweiligen Befestigungsbereiche einfach aneinander positionierbar und festlegbar sind.

Natürlich ist es auch möglich, dass immer abwechselnd die Laschen in umgekehrte Umfangsrichtungen weisen. Dies ermöglicht, eine Blattfeder an zwei distalen Abschnitten der Blattfeder mit der Gegendruckplatte oder Anpressplatte zu verbinden und die Blattfeder an einem zentralen Abschnitt derselben mit der entsprechenden Anpressplatte oder Gegendruckplatte zu verbinden Dies hat die Vorteile, dass die Teileanzahl (an Blattfedern) reduziert ist, dass das Gewicht der Blattfedern (wegen "Wegfall" eines Befestigungsbereichs durch Doppelnutzung des zentralen Befestigungsbereichs) reduziert ist, dass die Anzahl an Befestigungsmitteln (aus demselben Grund) reduziert ist und dass die Anzahl an Befestigungsschritten (aus demselben Grund) reduziert ist. Somit ergibt sich insgesamt eine deutliche Kostenersparnis.

Die Gegendruckplatte oder Anpressplatte, an welcher die Lasche gebildet ist, kann einen Schlitz haben, welcher die Lasche stückweise bzw. abschnittsweise von der Gegendruckplatte oder Anpressplatte trennt, derart, dass die Gegendruckplatte oder Anpressplatte integral mit der Lasche verbunden ist. Dies ermöglicht, dass die Lasche axial weiter (bzw. mit größerem Maß) von einer an der Gegendruckplatte oder Anpressplatte gebildeten Reibfläche beabstandet ist, als (das Maß, mit welchem) die Lasche in radialer Richtung von der Reibfläche beabstandet ist. Dies hat zwei Vorteile: Zum Einen kann bei einer umformend aus Blech gebildeten Gegendruckplatte oder Anpressplatte eine Dicke bzw. Materialstärke konstant gehalten oder auf eine gewünschte Dicke eingestellt werden, da der radiale Abstand zwischen Lasche und Reibfläche die Dicke der integralen Verbindung von Lasche und Reibfläche nicht beeinflusst, und zum anderen kann eine Umlenkung des Kraftflusses zwischen Lasche und Reibfläche in der Gegendruckplatte oder Anpressplatte von dem radialen Abstand zwischen Lasche und Reibfläche unbeeinflusst gewählt werden.

Konventionelle Niete zur Kostenreduktion lassen sich einsetzen, wenn der Niet (nur) einen stufenlosen zylindrischen Stiftabschnitt aufweist, an den sich an einem Ende eine Vergrößerung, etwa nach Art eines Pilzkopfes oder einer Kappe, anschließt.

Für die Fertigung ist es von Vorteil, wenn die Lasche auf der geblechten Gegendruckplatte oder Anpressplatte durch einen Tiefzieh-, Stanz- und/oder Kaltumformprozess ausgeformt ist. Dies kann ein einstufiger Prozess oder ein mehrstufiger Prozess sein. Alternativ ist es natürlich auch möglich, dass die Lasche aus einem Gussabschnitt einer aus Gussmaterial geformten Gegendruckplatte oder Anpressplatte besteht. Die Gegendruckplatte oder Anpressplatte kann somit spanlos gefertigt sein. Weiterbildend kann vorgesehen sein, dass die Gegendruckplatte oder Anpressplatte aus einem metallischen Werkstoff, vorzugsweise aus einem Eisenwerkstoff, besonders bevorzugt aus einem Stahlwerkstoff besteht.

Für die Aktivierung ist es von Vorteil, wenn die erste oder zweite Anpressplatte mit einem relativ steifen und/oder unverbiegbaren Drucktopf verbunden ist.

Es kann sich insbesondere um eine Blattfeder handeln, welche die jeweilige Anpressplatte bei wenigstens teilweise klemmender Anpressplattenlage entgegen der Klemmrichtung mit einer Kraft beaufschlagt. Die Blattfeder kann auch als Rückstellfeder, als rückstellende Blattfeder oder als Rückstellblattfeder bezeichnet werden. Die Blattfeder kann einen zum Befestigungsbereich der Gegendruckplatte komplementären Befestigungsbereich haben. Dabei kann der Begriff "Blattfeder" eine einzelne, einstückig gebildete Blattfeder oder, bevorzugt, ein Blattfederpaket bezeichnen.

Die Erfindung betrifft auch einen Antriebsstrang eines Kraftfahrzeuges, wie eines PKWs, eines LKWs oder eines sonstigen Nutzfahrzeuges, mit einer Doppelkupplung / Mehrscheibenkupplung der erfindungsgemäßen Art.

Die Erfindung kann ferner unabhängig beanspruchbar eine Gegendruckplatte für eine Kupplungsvorrichtung mit einer zum Übertragen von Leistung mittels Reibung durch Klemmen einer Kupplungsscheibe zwischen eine Reibfläche der Gegendruckplatte und eine Reibfläche der Anpressplatte axial begrenzt verlagerbaren Anpressplatte und mit einer zum Aufbringen einer entgegen der Klemmrichtung auf die Anpressplatte wirkenden Kraft an der Gegendruckplatte (und an der Anpressplatte) anbringbaren Blattfeder betreffen, wobei die Aufgabe der Erfindung dadurch gelöst wird, dass die Gegendruckplatte einen zur Reibfläche axial versetzten, spanlos gebildeten Befestigungsabschnitt / Befestigungsbereich / Lagerabschnitt zum Befestigen/Lagern der Blattfeder hat. Dabei bezeichnet die Reibfläche den Abschnitt der Gegendruckplatte, an welchen eine Kupplungsscheibe zum Übertragen von Leistung mittels Reibung gedrückt wird. Mithin ist die Reibfläche eine Fläche, welche mit einer Reibfläche einer Anpressplatte oder mit einer Reibfläche einer Zwischenanpressplatte zusammen die Kupplungsscheibe zum Übertragen von Leistung mittels Reibung zu klemmen vermag. Die Reibfläche kann eine konvexe, ebene oder konkave Form haben. Die konvexe oder die konkave Form können kugelartig oder kegelartig ausgebildet sein. Die Reibfläche kann eine glatte Oberfläche haben. Die Reibfläche kann in Umfangsrichtung verlaufende Rillen haben. Dabei kann eine bevorzugte Gestaltung der Reibfläche eine kegelartig konkave Form mit in Umfangsrichtung verlaufenden Rillen sein.

Die Gegendruckplatte kann mit einer Kurbelwelle einer Verbrennungskraftmaschine drehfest verbindbar sein. Die Gegendruckplatte kann mit einem Schwungrad oder mit einem Zweimassenschwungrad drehfest verbindbar sein. Die Gegendruckplatte kann ein Schwungrad oder Teil eines Schwungrads oder eine Sekundärmasse eines Zweimassenschwungrads oder Teil einer solchen Sekundärmasse sein. Die Gegen(druck)platte kann mit der Anpressplatte drehfest verbindbar sein. Die Gegenplatte / Gegendruckplatte kann mit einer Zwischenanpressplatte drehfest verbindbar sein.

Es kann vorgesehen sein, dass die Kupplungsscheibe zum Übertragen von Leistung an zumindest ein Antriebsrad eines Fahrzeugs mit einer Eingangswelle eines Getriebes drehfest verbindbar ist. Das Getriebe kann ein Schaltgetriebe, ein Handschaltgetriebe, ein Automatikgetriebe, ein Wandlergetriebe, ein Vorgelegegetriebe, ein Doppelkupplungsgetriebe oder ein Getriebe mit kontinuierlich veränderbarem Übersetzungsverhältnis (auch CVT-Getriebe genannt) sein.

Die Erfindung kann ferner unabhängig beanspruchbar eine Anpressplatte für eine Kupplungsvorrichtung betreffen, wobei die Anpressplatte zum Übertragen von Leistung mittels Reibung durch Klemmen einer Kupplungsscheibe zwischen eine Reibfläche der Gegendruckplatte und eine Reibfläche der Anpressplatte axial begrenzt verlagerbar ist, und wobei die Kupplungsvorrichtung zum Aufbringen einer entgegen der Klemmrichtung auf die Anpressplatte wirkenden Kraft eine an der Anpressplatte (und an der Gegendruckplatte) anbringbare Blattfeder hat, wobei die Aufgabe erfindungsgemäß dadurch gelöst wird, dass die Anpressplatte einen zur Reibfläche axial versetzten, spanlos gebildeten Befestigungsabschnitt/Befestigungsbereich/Lagerabschnitt zum Befestigen/Lagern der Blattfeder hat.

Es kann weiterbildend oder unabhängig beanspruchbar vorgesehen sein, dass der Befestigungsabschnitt zur Reibfläche (der Gegendruckplatte oder der Anpressplatte) näherungsweise parallel ist und zwischen dem Befestigungsabschnitt und der Reibfläche zwei Biegeabschnitte und möglicherweise ein Abstandsabschnitt gebildet sind. Somit kann der Kraftfluss zwischen dem Befestigungsabschnitt und dem Hauptkörper der Gegendruckplatte oder der Anpressplatte mit der Reibfläche umgelenkt werden. Die Biegeabschnitte ermöglichen dabei, Grenzwerte hinsichtlich der Kerbwirkung einzuhalten.

Weiterbildend oder unabhängig beanspruchbar kann vorgesehen sein, dass die Gegendruckplatte radial innerhalb der Reibfläche ein Zentrierabschnitt zum Zentrieren der Gegenplatte hat, beispielsweise zum Zentrieren an einem mit einer Getriebeeingangswelle verbundenen Wälzlager. Somit kann die Gegendruckplatte neben dem Befestigen der Blattfeder und neben der Reibfläche eine weitere Funktion erfüllen. Dadurch kann die Teilezahl innerhalb der Kupplung verringert sein, Gewicht gespart werden und können Montageschritte eingespart werden.

Man könnte auch sagen, dass für eine Weiterentwicklung einer Kupplung im Blechdesign, insbesondere einer trockenen Doppelkupplung mit Blechplatte zur Verbindung von Blechplatten mit einem Blattfederpaket bei großem Abstand zwischen Gegenplatte und Anpressplatte, insbesondere bei einer Mehrscheibenkupplung zwischen der Gegenplatte einer Teilkupplung K2 (getriebeseitig) und der Anpressplatte der K2 vorgeschlagen wird, das Blech der Gegendruckplatte im Außenbereich in Umfangsrichtung teilweise/abschnittsweise aufzustellen oder umzuformen. Somit wird der Abstand überwunden und kann das Blattfederpaket vernietet werden.. Mit anderen Worten handelt es sich auch um eine Lösung zur Verbindung von Blechplatten mit Blattfederpaketen bei großen Abständen zwischen der Gegenplatte und der ersten Anpressplatte ohne ein zusätzliches Bauteil, welche durch (teilweises/abschnittsweise) Aufstellen oder Umformen der Blechplatte in Umfangsrichtung realisiert wird.

Mit wieder anderen Worten sieht die vorliegende Erfindung vor, eine Gegendruckplatte / Gegenplatte einer Kupplung spanlos so umzuformen, dass sich eine (teilweise/abschnittsweise) Aufstellung / Umformung des Blechs im radialen Außenbereich entsprechend einer zu verringernden Distanz ergibt. Diese Umformung kann gleichzeitig mit oder zeitnah zu einem Stanzen der Blechplatten erfolgen. Es kann die Gegendruckplatte und/oder die Anpressplatte entsprechend umgeformt werden.

Die Erfindung wird nachfolgend mit Hilfe einer Zeichnung näher erläutert. Dabei sind drei Ausführungsbeispiele dargestellt. Es zeigen:
- Fig. 1: eine Seitenansicht einer Doppelkupplung gemäß der ersten Ausführungsform
- Fig. 2: eine Seitenansicht einer Anpressplatte, einer Blattfeder und einer Gegendruckplatte einer erfindungsgemäßen Doppelkupplung gemäß einer ersten Ausführungsform der Erfindung,
- Fig. 3: eine Draufsicht quer zur Längsachse auf den Bereich von Fig. 1,
- Fig. 4: eine Seitenansicht einer Anpressplatte, einer Blattfeder und einer Gegendruckplatte einer erfindungsgemäßen Doppelkupplung gemäß einer zweiten Ausführungsform der Erfindung,
- Fig. 5: eine Draufsicht quer zur Längsachse auf den Bereich der Doppelkupplung der in Fig. 3 dargestellt ist,
- Fig. 6: eine Seitenansicht einer Anpressplatte, einer Blattfeder und einer Gegendruckplatte einer erfindungsgemäßen Doppelkupplung gemäß einer dritten Ausführungsform der Erfindung,
- Fig. 7: eine Draufsicht quer zur Längsachse auf den Bereich von Fig. 5, und

Die Figuren sind lediglich schematischer Natur und dienen ausschließlich dem Verständnis der Erfindung. Die gleichen Elemente sind mit denselben Bezugszeichen versehen. Elemente der einzelnen Ausführungsformen sind untereinander austauschbar, soweit nicht anders beschrieben.

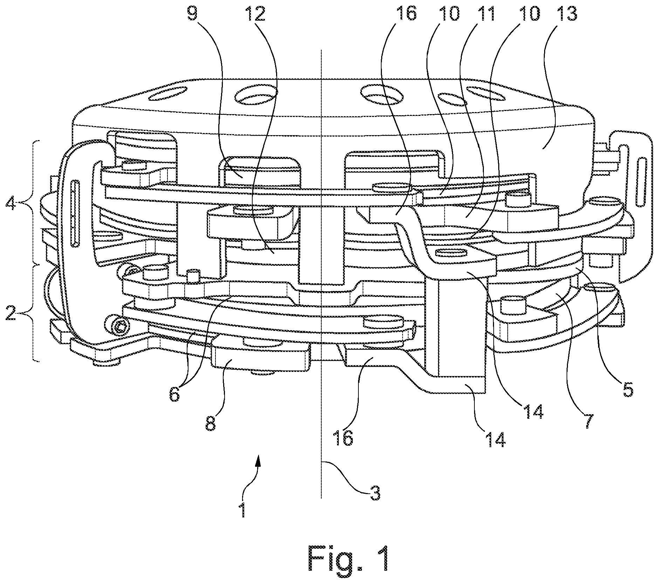

In Fig. 1 ist eine erfindungsgemäße Doppelkupplung 1 für ein Kraftfahrzeug dargestellt. Ein solches Kraftfahrzeug kann eine Verbrennungskraftmaschine beinhalten und als PKW, LKW, Bus oder ähnliches ausgebildet sein. Es ist eine erste motorseitig angeordnete Teilkupplung 2 vorhanden, an die sich in Axialrichtung, welche durch eine Längsachse 3 vorgegeben ist, eine zweite Teilkupplung 4 in Richtung eines nicht dargestellten Getriebes anschließt.

Die erste Teilkupplung 2 weist in Axialrichtung getriebeseitig begonnen unter anderem eine erste Anpressplatte 5, eine Kupplungsscheiben 6, eine Zwischenanpressplatte 7, eine weitere Kupplungsscheibe 6 und eine erste Gegendruckplatte 8 auf. Die erste Anpressplatte 5 ist axial auf die erste Gegendruckplatte 8 zu bewegbar, um die beiden Kupplungsscheiben 6 und dazwischen die Zwischenanpressplatte 7 einzuklemmen. Dadurch kann dann von einer (nicht dargestellten) Kurbelwelle der (nicht dargestellten) Verbrennungskraftmaschine Drehmoment auf eine (nicht dargestellte) innere Getriebeeingangswelle verbracht werden.

Die zweite Teilkupplung 4 weist in Axialrichtung getriebeseitig begonnen unter anderem eine zweite Anpressplatte 9, eine Kupplungsscheibe 10, eine Zwischenanpressplatte 11, eine weitere Kupplungsscheibe 10 und eine zweite Gegendruckplatte 12 auf. Auch die zweite Anpressplatte 9 ist axial bewegbar angeordnet, um die beiden Kupplungsscheiben 10 und dazwischen die Zwischendruckplatte 11 an der zweiten Gegendruckplatte 12 festzuklemmen. In diesem Fall wird dann Drehmoment von der Kurbelwelle auf eine (nicht dargestellte) äußere Getriebeeingangswelle verbracht.

Die Aktivierung der ersten Teilkupplung 2 und/oder der zweiten Teilkupplung 4 erfolgt über einen (nicht dargestellten) Aktor, beispielsweise nach Art eines CSC (concentric slave cylinder), welcher dann selektiv Druck auf Drucktöpfe, wie einen Drucktopf 13 der ersten Teilkupplung 2, weiterleitet.

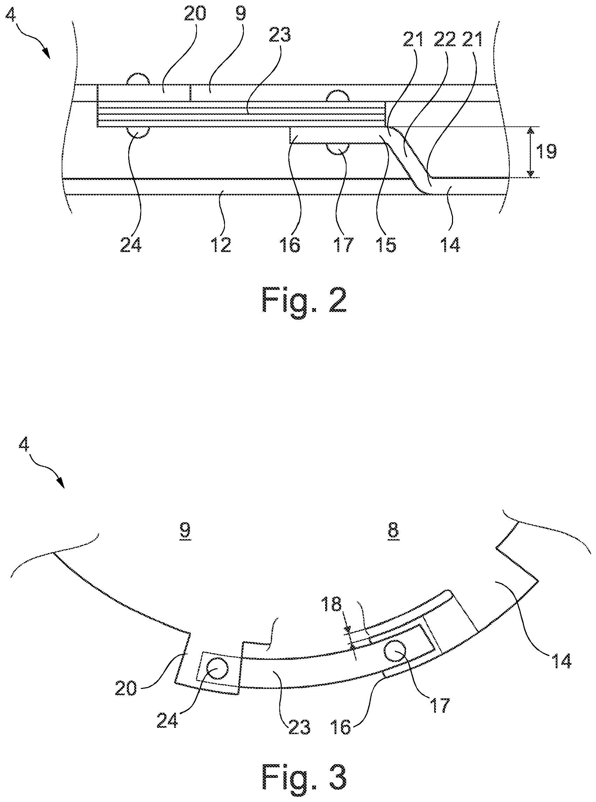

Beide Gegendruckplatten 8 und 12 weisen Laschen 14 auf, wie sie besonders gut in den Figuren 2 und 3 zu erkennen sind. Die Figuren 2 und 3 zeigen Teile der zweiten Teilkupplung 4.

Die Laschen 14 sind integrale Bestandteile jeweils der ersten Gegendruckplatte 8 und der zweiten Gegendruckplatte 12. An einem freien Ende 15 ist jeweils ein Befestigungsbereich 16 definiert/ausgebildet. Im Befestigungsbereich 16 ist jeweils ein Loch, nämlich ein Durchgangsloch vorhanden, in das jeweils ein Niet 17, wie in den Figuren 1 bis 3 zu erkennen, eingesetzt ist. Der Niet 17 kann ein konventioneller Niet mit Pilzkopf sein und ansonsten stufenlosem, zylindrischem Stängel/Stift.

In Zusammenschau der Figur 3 ist gut zu erkennen, dass die Gegendruckplatten 8 und 12 im Bereich der jeweiligen Laschen 14 derart ausgestaltet sind, dass die Laschen 14 einer Umfangsrichtung folgen, also einen Schlitz 18 ausbilden und zusätzlich axial zur restlichen Gegendruckplatte 8 bzw. 12, insbesondere zu derem Hauptbereich, um den Weg/Abstand 19 abstehen/distanziert sind. Zwischen dem Befestigungsbereich 16 und dem Hauptkörper der Gegendruckplatte 12 sind zwei Biegeabschnitte 21 und ein Abstandsabschnitt 22 ausgebildet.

Wie in den Fig. 1 und 2 dargestellt, ist an dem Befestigungsbereich 16 mittels des Niets 17 ein erstes Ende eines Blattfedernpakets 23 befestigt. Das andere Ende des Blattfedernpakets 23 ist mittels eines Niets 24 an einer Lasche 20 der Anpressplatte 9 angebracht. Die Lasche 20 ist integraler Bestandteil der Anpressplatte 9.

Wird die Anpressplatte 9 durch den Aktor betätigt, das heißt wird die Anpressplatte 9 zum Klemmen der Kupplungsscheiben 10 und der Zwischenanpressplatte 11 axial in Richtung der Gegendruckplatte 12 verlagert, wird das Blattfedernpaket 23 elastisch verformt. Endet die Betätigung des Aktors, verlagert das Blattfedernpaket 23 unter Entspannung der elastischen Verformung die Anpressplatte 9 zurück in deren Ausgangslage. Es wird dann kein Drehmoment mehr von der Kurbelwelle auf die Getriebeeingangswelle übertragen.

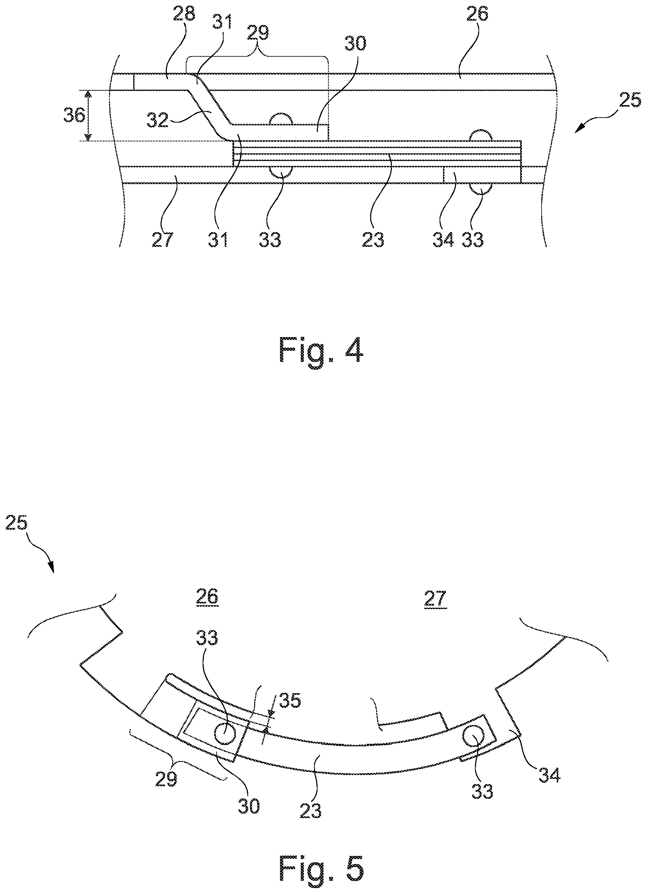

Die Fig. 4 und 5 zeigen eine zweite Ausführungsform der Erfindung. Der grundsätzliche Aufbau einer solchen (nicht dargestellten) Doppelkupplung der zweiten Ausführungsform entspricht dem grundsätzlichen Aufbau der Doppelkupplung 1 der ersten Ausführungsform, wie anhand der Fig. 1 erklärt.

Die Fig. 4 und 5 zeigen eine Teilkupplung 25 mit einer Anpressplatte 26, einer Druckplatte 27 und einem Blattfedernpaket 23. Die Anpressplatte 26 weist eine Lasche 28 auf. Die Laschen 28 ist integraler Bestandteil der Anpressplatte 26. An einem freien Ende 29 ist ein Befestigungsbereich 30 definiert/ausgebildet. Zwischen dem Befestigungsbereich 30 und dem Hauptkörper der Anpressplatte 26 sind zwei Biegeabschnitte 31 und ein Abstandsabschnitt 32 gebildet. Im Befestigungsbereich 30 ist ein Loch, nämlich ein Durchgangsloch vorhanden, in das ein Niet 33 eingesetzt ist. Der Niet 33 gleicht dem Niet 17.

An dem Befestigungsbereich 30 ist mittels des Niets 33 ein erstes Ende des Blattfedernpakets 23 befestigt. Das andere Ende des Blattfedernpakets 23 ist mittels eines Niets 33 an einer Lasche 34 der Gegendruckplatte 27 angebracht.

Die Anpressplatte 26 ist im Bereich der Lasche 28 derart ausgestaltet, dass die Lasche 28 einer Umfangsrichtung folgt, also einen Schlitz 35 ausbildet und zusätzlich axial zur restlichen Anpressplatte 26, insbesondere zu derem Hauptbereich, um den Weg/Abstand 36 absteht/distanziert ist.

Im Übrigen gilt das zur ersten Ausführungsform Beschriebene.

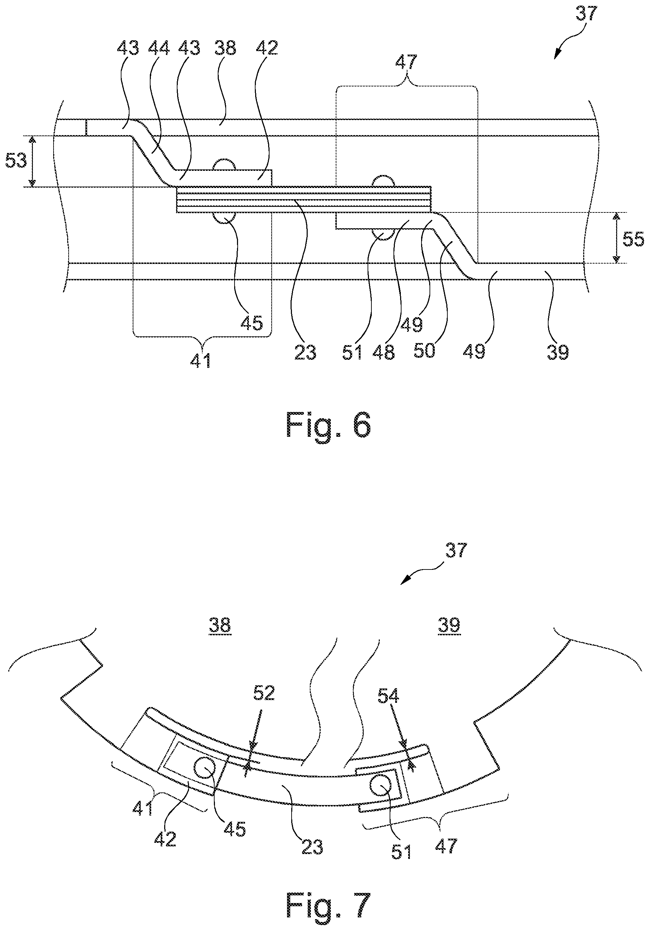

Die Fig. 6 und 7 zeigen eine dritte Ausführungsform der Erfindung. Der grundsätzliche Aufbau einer (nicht dargestellten) Doppelkupplung der dritten Ausführungsform entspricht dem grundsätzlichen Aufbau der Doppelkupplung 1 der ersten Ausführungsform, wie anhand der Fig. 1 erklärt, und der Doppelkupplung der zweiten Ausführungsform.

Die Fig. 6 und 7 zeigen eine Teilkupplung 37 mit einer Anpressplatte 38, einer Gegendruckplatte 39 und einem Blattfedernpaket 23. Die Anpressplatte 38 weist eine Lasche 40 auf. Die Laschen 40 ist integraler Bestandteil der Anpressplatte 38. An einem freien Ende 41 ist ein Befestigungsbereich 42 definiert/ausgebildet. Zwischen dem Befestigungsbereich 42 und dem Hauptkörper der Anpressplatte 38 sind zwei Biegeabschnitte 43 und ein Abstandsabschnitt 44 gebildet. Im Befestigungsbereich 42 ist ein Loch, nämlich ein Durchgangsloch vorhanden, in das ein Niet 45 eingesetzt ist. Der Niet 45 gleicht dem Niet 17.

Die Gegendruckplatte 39 weist eine Lasche 46 auf. Die Lasche 46 ist ein integraler Bestandteil der Gegendruckplatte 39. An einem freien Ende 47 ist ein Befestigungsbereich 48 definiert/ausgebildet. Zwischen dem Befestigungsbereich 48 und dem Hauptkörper der Gegendruckplatte 39 sind zwei Biegeabschnitte 49 und ein Abstandsabschnitt 50 gebildet. Im Befestigungsbereich 48 ist ein Loch, nämlich ein Durchgangsloch vorhanden, in das ein Niet 51 eingesetzt ist. Der Niet 51 gleicht dem Niet 17.

An dem Befestigungsbereich 42 ist mittels des Niets 45 ein erstes Ende des Blattfedernpakets 23 befestigt. Das andere Ende des Blattfedernpakets 23 ist mittels des Niets 51 an der Lasche 46 der Gegendruckplatte 39 angebracht.

Die Anpressplatte 38 ist im Bereich der Lasche 40 derart ausgestaltet, dass die Lasche 40 einer Umfangsrichtung folgt, also einen Schlitz 52 ausbildet und zusätzlich axial zur restlichen Anpressplatte 38, insbesondere zu derem Hauptbereich, um den Weg/Abstand 53 absteht/distanziert ist.

Die Gegendruckplatte 39 ist im Bereich der Lasche 46 derart ausgestaltet, dass die Lasche 46 einer Umfangsrichtung folgt, also einen Schlitz 54 ausbildet und zusätzlich axial zur restlichen Gegendruckplatte 39, insbesondere zu derem Hauptbereich, um den Weg/Abstand 55 absteht/distanziert ist.

Im Übrigen gilt das zur ersten und/oder zweiten Ausführungsform Beschriebene.

### Bezugszeichenliste

- 1: Doppelkupplung
- 2: erste Teilkupplung
- 3: Längsachse
- 4: zweite Teilkupplung
- 5: Anpressplatte
- 6: Kupplungsscheibe
- 7: Zwischenanpressplatte
- 8: Gegendruckplatte
- 9: Anpressplatte
- 10: Kupplungsscheibe
- 11: Zwischenanpressplatte
- 12: Gegendruckplatte
- 13: Drucktopf
- 14: Lasche
- 15: freies Ende
- 16: Befestigungsbereich
- 17: Niet
- 18: Schlitz
- 19: axialer Abstand / Weg
- 20: Lasche
- 21: Biegeabschnitt
- 22: Abstandsabschnitt
- 23: Blattfedernpaket
- 24: Niet
- 25: Teilkupplung
- 26: Anpressplatte
- 27: Gegendruckplatte
- 28: Lasche
- 29: freies Ende
- 30: Befestigungsbereich
- 31: Biegeabschnitt
- 32: Abstandsabschnitt
- 33: Niet
- 34: Lasche
- 35: Schlitz
- 36: axialer Abstand / Weg
- 37: Teilkupplung
- 38: Anpressplatte
- 39: Gegendruckplatte
- 40: Lasche
- 41: freies Ende
- 42: Befestigungsbereich
- 43: Biegeabschnitt
- 44: Abstandsabschnitt
- 45: Niet
- 46: Lasche
- 47: freies Ende
- 48: Befestigungsbereich
- 49: Biegeabschnitt
- 50: Abstandsabschnitt
- 51: Niet
- 52: Schlitz
- 53: axialer Abstand / Weg
- 54: Schlitz
- 55: axialer Abstand / Weg

## Patentansprüche

1. Doppelkupplung (1) für ein Kraftfahrzeug, mit einer motorseitig angeordneten ersten Teilkupplung (2, 25, 37) und einer getriebeseitig angeordneten zweiten Teilkupplung (4, 25, 37), wobei jede Teilkupplung (2, 4, 25, 37) eine Anpressplatte (5, 9, 26, 38) aufweist, die zum Einklemmen einer Kupplungsscheibe (6, 10) auf eine Gegendruckplatte (8, 12, 27, 39) zu bewegbar ist, wobei die Gegendruckplatte (8, 12, 27, 39) wenigstens einer Teilkupplung (2, 4, 25, 37) mittels einer Blattfeder (23) mit der Anpressplatte (5, 9, 26, 38) derselben Teilkupplung (2, 4, 25, 37) verbunden ist, **dadurch gekennzeichnet, dass** wenigstens eine der Gegendruckplatten (8, 12, 27, 39) und/oder wenigstens eine der Anpressplatten (5, 9, 26, 38) eine der Umfangsrichtung folgende Lasche (14, 28, 40, 46) ausbildet, die axial abstehend einen Befestigungsbereich (16, 30, 42, 48) mit der Blattfeder (23) vorgibt.

2. Doppelkupplung (1) nach Anspruch 1, **dadurch gekennzeichnet, dass** die Lasche (14, 28, 40, 46) integraler Bestandteil der Gegendruckplatte (8, 12, 27, 39) oder der Anpressplatte (5, 9, 26, 38) ist, von welcher diese axial absteht.

3. Doppelkupplung (1) nach Anspruch 2, **dadurch gekennzeichnet, dass** die Lasche (14, 28, 40, 46) der Gegendruckplatte (8, 12, 27, 39) oder Anpressplatte (5, 9, 26, 38) mit der Blattfeder (23) in direktem Kontakt steht.

4. Doppelkupplung (1) nach einem der Ansprüche 1 bis 3, **dadurch gekennzeichnet, dass** im Befestigungsbereich (16, 30, 42, 48) ein Bolzen oder Niet (17, 33, 45, 51) eingesetzt ist.

5. Doppelkupplung (1) nach einem der Ansprüche 2 bis 4, **dadurch gekennzeichnet, dass** die Lasche (14, 28, 40, 46) in Umfangsrichtung zu der Blattfeder (23) weisend ein freies Ende (15, 29, 41, 47) besitzt.

6. Doppelkupplung (1) nach einem der Ansprüche 2 bis 5, **dadurch gekennzeichnet, dass** die die Gegendruckplatte (8, 12, 27, 39) oder Anpressplatte (5, 9, 26, 38) einen Schlitz (18, 35, 52, 54) hat, welcher die Lasche (14, 28, 40, 46) stückweise von der Gegendruckplatte (8, 12, 27, 39) oder Anpressplatte (5, 9, 26, 38) trennt, derart, dass die Gegendruckplatte (8, 12, 27, 39) oder Anpressplatte (5, 9, 26, 38) integral mit der Lasche (14, 28, 40, 46) verbunden ist.

7. Doppelkupplung (1) nach einem der Ansprüche 4 bis 6, **dadurch gekennzeichnet, dass** der Niet (17, 33, 45, 51) einen stufenlosen zylindrischen Stiftabschnitt aufweist, an dem sich an einem Ende eine Vergrößerung anschließt.

8. Doppelkupplung (1) nach einem der Ansprüche 1 bis 7, **dadurch gekennzeichnet, dass** die Lasche (14, 28, 40, 46) aus der geblechten Gegendruckplatte (8, 12, 27, 39) oder Anpressplatte (5, 9, 26, 38) durch einen Tiefzieh-, Stanz- und/oder Kaltumformprozess ausgeformt ist.

9. Doppelkupplung (1) nach einem der Ansprüche 1 bis 8, **dadurch gekennzeichnet, dass** die Blattfeder (23) bei wenigstens teilweise klemmender Anpressplattenlage zwischen der jeweiligen Anpressplatte (5, 9, 26, 38) und der jeweiligen Gegendruckplatte (8, 12, 27, 39) eine Kraft entgegen der Klemmrichtung bewirkt.

10. Antriebsstrang eines Kraftfahrzeugs mit einer Doppelkupplung (1) nach einem der Ansprüche 1 bis 9.

## Claims

1. Dual clutch (1) for a motor vehicle, having a first partial clutch (2, 25, 37) arranged on the engine side and a second partial clutch (4, 25, 37) arranged on the gearbox side, each partial clutch (2, 4, 25, 37) having a pressure plate (5, 9, 26, 38) which can be moved towards a counter-pressure plate (8, 12, 27, 39) in order to clamp in a clutch disc (6, 10), the counter-pressure plate (8, 12, 27, 39) of at least one partial clutch (2, 4, 25, 37) being connected to the pressure plate (5, 9, 26, 38) of the same partial clutch (2, 4, 25, 37) by means of a leaf spring (23), **characterized in that** at least one of the counter-pressure plates (8, 12, 27, 39) and/or at least one of the pressure plates (5, 9, 26, 38) forms a lug (14, 28, 40, 46) following the circumferential direction, which, protruding axially, predefines a fixing region (16, 30, 42, 48) with the leaf spring (23).

2. Dual clutch (1) according to Claim 1, **characterized in that** the lug (14, 28, 40, 46) is an integral constituent part of the counter-pressure plate (8, 12, 27, 39) or the pressure plate (5, 9, 26, 38) from which it protrudes axially.

3. Dual clutch (1) according to Claim 2, **characterized in that** the lug (14, 28, 40, 46) of the counter-pressure plate (8, 12, 27, 39) or the pressure plate (5, 9, 26, 38) is in direct contact with the leaf spring (23).

4. Dual clutch (1) according to one of Claims 1 to 3, **characterized in that** a bolt or rivet (17, 33, 45, 51) is inserted in the fixing region (16, 30, 42, 48) .

5. Dual clutch (1) according to one of Claims 2 to 4, **characterized in that** the lug (14, 28, 40, 46) has a free end (15, 29, 41, 47) pointing towards the leaf spring (23) in the circumferential direction,

6. Dual clutch (1) according to one of Claims 2 to 5, **characterized in that** the counter-pressure plate (8, 12, 27, 39) or pressure plate (5, 9, 26, 38) has a slot (18, 35, 52, 54), which separates the lug (14, 28, 40, 46) piecewise from the counter-pressure plate (8, 12, 27, 39) or pressure plate (5, 9, 26, 38) in such a way that the counter-pressure plate (8, 12, 27, 39) or pressure plate (5, 9, 26, 38) is integrally connected to the lug (14, 28, 40, 46).

7. Dual clutch (1) according to one of Claims 4 to 6, **characterised in that** the rivet (17, 33, 45, 51) has a continuous cylindrical pin section, which is followed at one end by an enlargement.

8. Dual clutch (1) according to one of Claims 1 to 7, **characterized in that** the lug (14, 28, 40, 46) is formed from the laminated counter-pressure plate (8, 12, 27, 39) or pressure plate (5, 9, 26, 38) by a deep-drawing, stamping and/or cold-forming process.

9. Dual clutch (1) according to one of Claims 1 to 8, **characterized in that** in at least partly clamping pressure-plate position between the respective pressure plate (5, 9, 26, 38) and the respective counter-pressure plate (8, 12, 27, 39), the leaf spring (23) effects a force counter to the clamping direction.

10. Drive train of a motor vehicle having a dual clutch (1) according to one of Claims 1 to 9.

## Revendications

1. Embrayage double (1) pour un véhicule automobile, avec un premier embrayage partiel (2, 25, 37) disposé côté moteur et un deuxième embrayage partiel (4, 25, 37) disposé côté boîte de vitesses, dans lequel chaque embrayage partiel (2, 4, 25, 37) présente un plateau de pression (5, 9, 26, 38), qui peut être déplacé vers un plateau de contrepression (8, 12, 27, 39) pour le serrage d'un disque d'embrayage (6, 10), dans lequel le plateau de contrepression (8, 12, 27, 39) d'au moins un embrayage partiel (2, 4, 25, 37) est relié au plateau de pression (5, 9, 26, 38) du même embrayage partiel (2, 4, 25, 37) au moyen d'un ressort à lames (23), **caractérisé en ce qu'**au moins un des plateaux de contrepression (8, 12, 27, 39) et/ou au moins un des plateaux de pression (5, 9, 26, 38) forme une patte (14, 28, 40, 46) qui suit la direction périphérique, qui définit en saillie axiale une zone de fixation (16, 30, 42, 48) avec le ressort à lames (23).

2. Embrayage double (1) selon la revendication 1, **caractérisé en ce que** la patte (14, 28, 40, 46) fait intégralement partie du plateau de contrepression (8, 12, 27, 39) ou du plateau de pression (5, 9, 26, 38), à partir duquel elle est saillante axialement.

3. Embrayage double (1) selon la revendication 2, **caractérisé en ce que** la patte (14, 28, 40, 46) du plateau de contrepression (8, 12, 27, 39) ou du plateau de pression (5, 9, 26, 38) est en contact direct avec le ressort à lames (23).

4. Embrayage double (1) selon l'une quelconque des revendications 1 à 3, **caractérisé en ce qu'**un boulon ou un rivet (17, 33, 45, 51) est utilisé dans la zone de fixation (16, 30, 42, 48).

5. Embrayage double (1) selon l'une quelconque des revendications 2 à 4, **caractérisé en ce que** la patte (14, 28, 40, 46) possède une extrémité libre (15, 29, 41, 47) orientée en direction périphérique vers le ressort à lames (23).

6. Embrayage double (1) selon l'une quelconque des revendications 2 à 5, **caractérisé en ce que** le plateau de contrepression (8, 12, 27, 39) ou le plateau de pression (5, 9, 26, 38) comporte une fente (18, 35, 52, 54), qui sépare par portions la patte (14, 28, 40, 46) du plateau de contrepression (8, 12, 27, 39) ou du plateau de pression (5, 9, 26, 38), de telle manière que le plateau de contrepression (8, 12, 27, 39) ou le plateau de pression (5, 9, 26, 38) soit intégralement relié à la patte (14, 28, 40, 46).

7. Embrayage double (1) selon l'une quelconque des revendications 4 à 6, **caractérisé en ce que** le rivet (17, 33, 45, 51) présente une partie de tige cylindrique continue, à laquelle se raccorde un agrandissement à une extrémité.

8. Embrayage double (1) selon l'une quelconque des revendications 1 à 7, **caractérisé en ce que** la patte (14, 28, 40, 46) est formée à partir du plateau de contrepression (8, 12, 27, 39) ou du plateau de pression (5, 9, 26, 38) en tôle par un procédé d'emboutissage, d'estampage et/ou de formage à froid.

9. Embrayage double (1) selon l'une quelconque des revendications 1 à 8, **caractérisé en ce que** le ressort à lames (23) exerce une force contre la direction de serrage entre le plateau de pression respectif (5, 9, 26, 38) et le plateau de contrepression respectif (8, 12, 27, 39) lorsque le plateau de pression est en position de serrage au moins partiel.

10. Chaîne cinématique d'un véhicule automobile avec un embrayage double (1) selon l'une quelconque des revendications 1 à 9.
